# EUROPÄISCHE PATENTSCHRIFT

(11) **EP 1 040 964 B1**
(45) Veröffentlichungstag und Bekanntmachung des Hinweises auf die Patenterteilung: **25.05.2005**
(21) Anmeldenummer: 00106619.0
(22) Anmeldetag: 28.03.2000
(51) Int. Cl.: B60R 5/04

(54) **Laderaum-Trennvorrichtung für Fahrzeuge, insbesondere für Kombinations-Personenkraftwagen**
Load compartment cover for vehicles, especially station wagons
Couvercle pour le compartiment à bagages de véhicules, en particulier véhicules familiaux

(30) Priorität: 01.04.1999 DE 19915173
(43) Veröffentlichungstag der Anmeldung: 04.10.2000
(73) Patentinhaber: BOS GmbH & Co. KG, 73760 Ostfildern (DE)
(72) Erfinder: Phlips, Vincent, 1780 Wemmel (BE)
(74) Vertreter: Patentanwälte Ruff, Wilhelm, Beier, Dauster & Partner

(56) Entgegenhaltungen:
- EP-A- 0 652 136
- EP-A- 0 712 757
- EP-A- 0 911 219
- DE-C- 19 621 009
- US-A- 4 222 601
- US-A- 4 668 001
- US-A- 4 671 557
- US-A- 5 813 449

## Beschreibung

Die Erfindung betrifft eine Laderaum-Trennvorrichtung für Fahrzeuge, insbesondere für Kombinations-Personenkraftwagen, entsprechend dem Oberbegriff des Anspruches 1.

Eine derartige Laderaum-Trennvorrichtung ist aus der DE 196 21 009 B1 bekannt. Die Laderaum-Trennvorrichtung weist eine Wickelwelle auf, die an ihren beiden Stirnenden mittels einer becherförmigen Lagerhülse auf je einem Hohlzapfen drehgelagert ist, der jeweils endseitig vom Boden der Endkappe hervorragt. Die Böden der Lagerhülsen bilden Stützen für jeweils eine Schraubendruckfeder, die sich mit dem gegenüberliegenden Ende an der Stirnwandung der jeweiligen Endkappe abstützt. Die becherförmige Lagerhülse ist endseititg fest in der hohlen Wickelwelle angeordnet. Mittels der becherförmigen Lagerhülse ist die Wickelwelle auf den hohlen Lagerzapfen der axial beweglichen Endkappe aufgesteckt.

Eine weitere Laderaum-Trennvorrichtung ist durch die US 41 68 094 bekanntgeworden. Die bekannte Laderaum-Trennvorrichtung weist ein etwa rohrartiges Hauptgehäuse auf, welches eine rohrartige Wickelwelle enthält, die beidendseitig auf je einem von einem Achsstutzen gebildeten Achselement drehgelagert ist. Eine derartige bekannte Wickelwelle enthält üblicherweise einen Federmotor mit einer durch Torsion spann- bzw. aufladbaren, als Schraubenfeder ausgebildeten, Drehspeicherfeder. Dabei stützt sich ein Federende an der Wickelwelle und das andere Federende am Achselement bzw. am Hauptgehäuse ab. Achselement bzw. Hauptgehäuse sind mittelbar über eine Halterung im Einbaufeld des Fahrzeugs gegen Drehung gesichert. Damit das Gehäuse der bekannten Laderaum-Trennvorrichtung an unterschiedliche Fahrzeugbreiten angepaßt werden kann, weisen die Ausführungsformen gemäß den Figuren 7-9 der US 41 68 094 stirnseitig axial vor dem Hauptgehäuse ein Zusatz-Achselement auf, welches beispielsweise mittels einer Schraubkappe oder mittels eines das Hauptgehäuse teleskopartig übergreifenden Ansatzes axial verstellbar und in mindestens einer Verstellposition lösbar festzulegen ist. Die Schraubkappe bzw. der Ansatz bilden jeweils ein Teilgehäuse.

Ber Erfindung liegt die Aufgabe zugrunde, eine LaderaumTrennvorrichtung zu schaffen, welche im Hinblick auf unterschiedliche Breiten des Fahrzeugraums größere Verstelldifferenzen bei gleichbleibend guter Steifigkeit der Vorrichtung gestattet.

Diese Aufgabe wird durch die Merkmale des Anspruchs 1 gelöst.

Die erfindungsgemäße Laderaum-Trennvorrichtung ist besonders für solche Anwendungsfälle vorgesehen, bei denen die Vorrichtung innerhalb des Fahrzeugs alternativ an Einbaustellen unterschiedlicher Breite lösbar eingebaut werden soll.

Die erfindungsgemäße Laderaum-Trennvorrichtung ist nicht auf eine bestimmte Art oder Anordnung der Werkstoffbahn beschränkt. Die Werkstoffbahn kann beispielsweise netzartig, folienartig oder tuchartig ausgebildet und, entsprechend den Besonderheiten des jeweiligen Anwendungsfalles, vertikal, horizontal oder geneigt innerhalb des Fahrzeugraums aufgespannt sein.

Weitere vorteilhafte Erfindungsmerkmale sind den Unteransprüchen zu entnehmen.

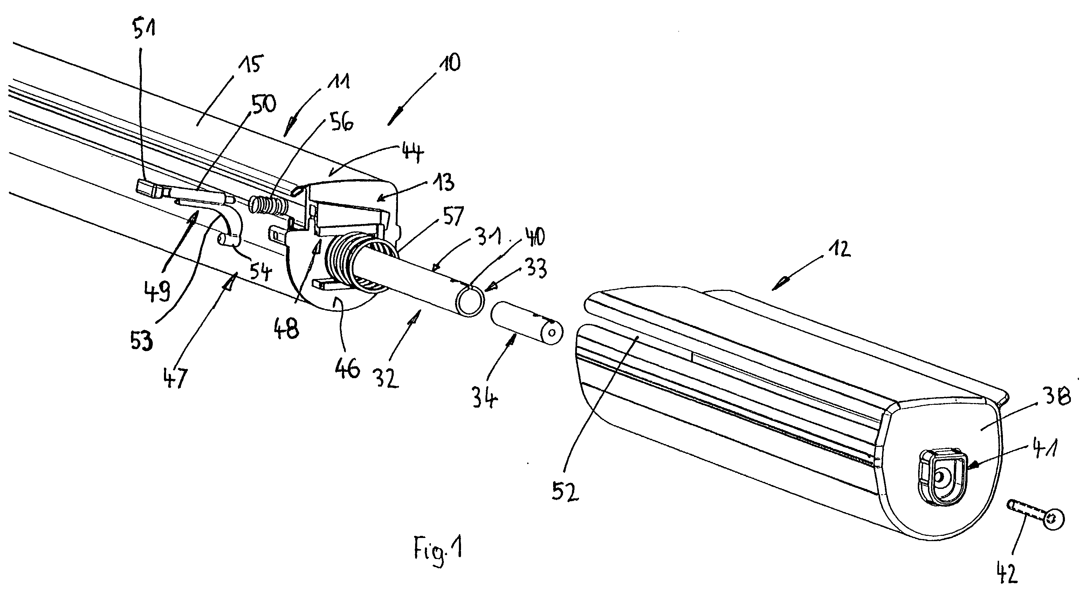

In den Zeichnungen ist ein bevorzugtes Ausführungsbeispiel entsprechend der Erfindung dargestellt, es zeigt
Fig. 1 einen Endbereich einer Laderaum-Trennvorrichtung in teilweise auseinandergezogener räumlicher Darstellung,
Fig. 2 den Endbereich der in Fig. 1 gezeigten Laderaum-Trennvorrichtung im axialen Längsschnitt, eingestellt für die kleinste Einbaubreite,
Fig. 3 in Anlehnung an die Darstellung gemäß Fig. 2 die Laderaum-Trennvorrichtung, eingestellt für die größte Einbaubreite,
Fig. 3A einen endseitigen Teilbereich von Fig. 3 in vergrößerter Darstellung,
Fig. 4 eine schematische Querschnittsdarstellung entsprechend der Schnittlinie IV - IV in Fig. 2 und
Fig. 5 eine schematische Querschnittsdarstellung entsprechend der Schnittlinie V - V in Fig. 3.

Eine Laderaum-Trennvorrichtung 10 weist ein Hauptgehäuse 11 und ein Teilgehäuse 12 auf. An seiner Außenseite ist das Hauptgehäuse 11 mittels einer Gehäusestirnwand 13 abgeschlossen. Auf bzw. an einem zur Vorrichtungsmitte weisenden Flansch 14 der Gehäusestirnwand 13 ist ein Gehäuse-Hohlteil 15 befestigt, welches einen Durchzugschlitz 16 für eine Werkstoffbahn 17, z.B. für eine textile tuchartige Bahn, aufweist.

Mit dem Flansch 14 gleichgerichtet, also ebenfalls zur Vorrichtungsmitte hinweisend, ragt von der Gehäusestirnwand 13 ein stoffschlüssig angeformtes Achselement in Gestalt einer Führungsbuchse 18 vor, welche insgesamt einen kreisrunden Querschnitt aufweist und welche mit ihrer Außenwandfläche eine Drehlagerfläche 19 für eine Gegendrehlagerfläche 20, gebildet von der kreiszylindrischen Innenmantelfläche einer kreisringförmigen Lagerscheibe 21, darstellt.

Mit der Lagerscheibe 21 ist eine Lagerhülse 22 stoffschlüssig verbunden, auf deren Radialrippen 23 und auf deren Axialrippen 24 die Innenmantelfläche 25 einer rohrartigen Wickelwelle 26 abgestützt ist. Die Lagerhülse 22 und die Lagerscheibe 21 bilden gemeinsam ein einheitliches Kunststoff-Spritzgußteil. Dabei kann das Kunststoff-Spritzgußteil beispielsweise so ausgebildet sein, daß zwei durch ein Filmscharnier miteinander verbundene Längsschalenhälften an dem nicht dargestellten Filmscharnier gegenüberliegenden Umfangsstellen mittels je eines Rasthakens 27 und je eines korrelierenden Raststeges 28 praktisch unlösbar miteinander verrastet sind.

Wickelwelle 26 und das Lagerbauteil 21, 22 sind auf Drehmitnahme formschlüssig miteinander verbunden. Dazu bildet die aus Stahlblech bestehende Wickelwelle 26 eine Axialrippe 29, welche in nicht dargestellte korrelierende Mitnahmeaussparungen in den Radialrippen 23 der Lagerhülse 22 eingreift.

An der kreiszylindrischen Innenmantelfläche 30 der Führungsbuchse 18 ist die kreiszylindrische Außenmantelfläche 31 eines Zusatz-Achselements 32 mit Schiebesitz gleitgeführt. Das Zusatz-Achselement 32 stellt ein kreiszylindrisches Stahlrohr dar, in dessen der Gehäusestirnwand 13 abgewandtem freien Ende 33 ein Kunststoffstopfen 34 eingelassen und mit radial einwärts gerichteten Kerben 35 in der Rohrwandung des Zusatz-Achselements 32 gegen Axialverschiebung gesichert ist.

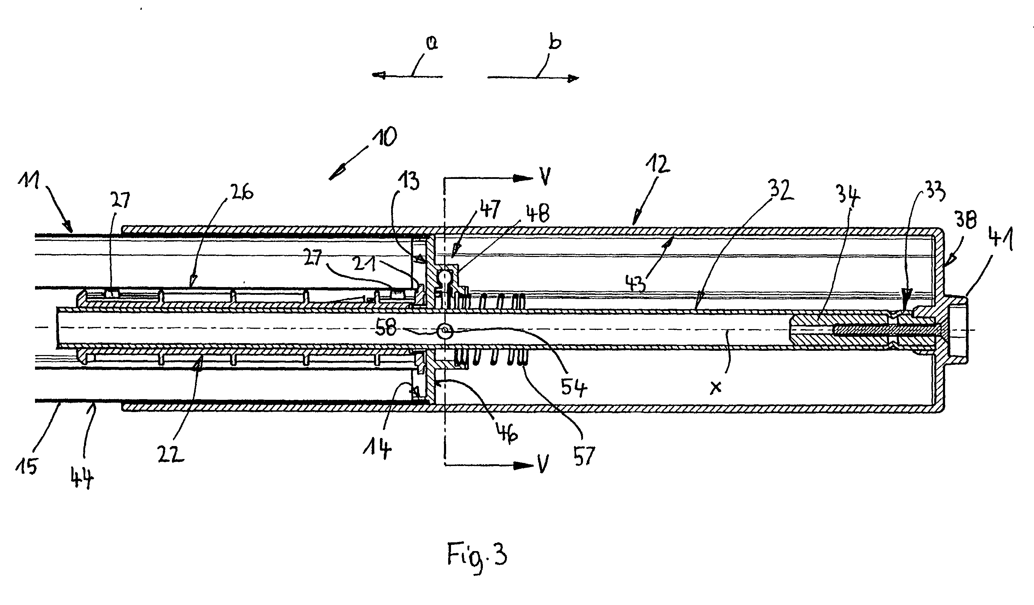

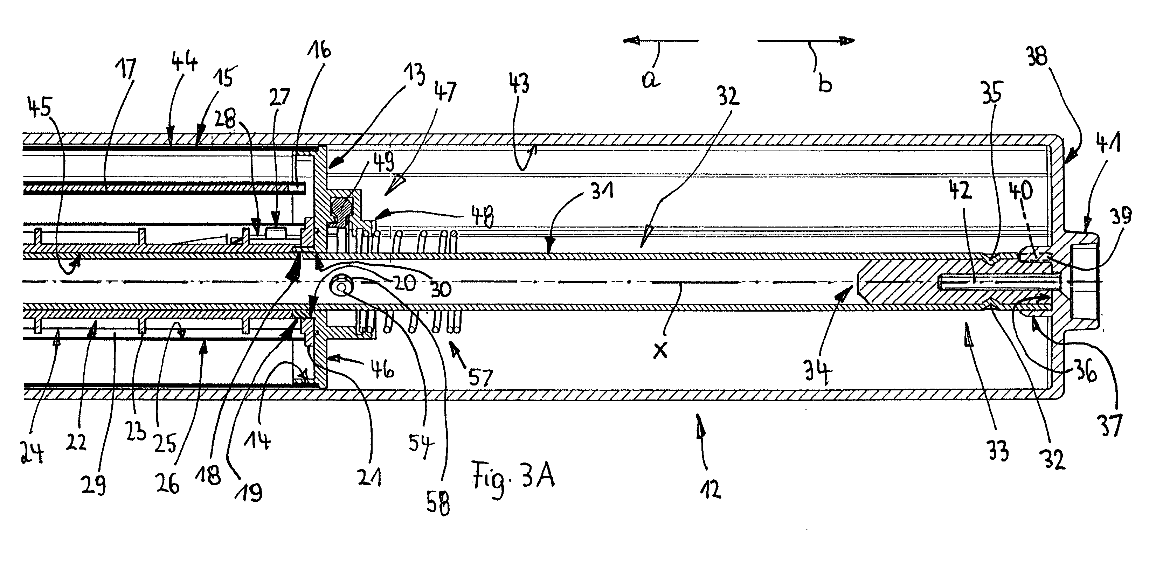

Das freie Ende 33 des Zusatz-Achselements 32 greift in ein Sackloch 36 eines Hohlzapfens 37 ein, welcher der Gehäusestirnwand 38 des Teilgehäuses 12, zur Vorrichtungsmitte hin vorragend, innen angeformt ist. Das Zusatz-Achselement 32 ist innerhalb des Hohlzapfens 37 dadurch gegen Drehung um die Längsmittelachse x gesichert, daß eine Axialrippe 39 des Hohlzapfens 37 in einen in Fig. 3A gestrichelt angedeuteten endseitigen Axialschlitz 40 des Zusatz-Achselements 32 eingreift.

An ihrer Außenseite weist die Gehäusestirnwand 38 einen etwa prismatischen Ansatz 41 auf, welcher in eine nicht dargestellte taschenartige fahrzeugseitige Halterungsaufnahme, gegen Drehung bezüglich der Längsmittelachse x gesichert, eingreifen kann. Eine die Gehäusestirnwand 38 von außen her durch den prismatischen Ansatz durchsetzende Schraube 42 ist mit dem Kunststoffstopfen 34 verschraubt. Das Zusatz-Achselement 32 ist also - insgesamt betrachtet - zug- und druckfest sowie außerdem drehfest mit dem Teilgehäuse 12 verbunden.

Die kreiszylindrische Innenmantelfläche 45 der Lagerhülse 22 erstreckt sich im wesentlichen bündig mit der kreiszylindrischen Innenmantelfläche 30 des Achselements 18.

Der Querschnittskontur der unrunden zylindrischen Innenmantelfläche 43 im mathematischen Sinne ähnlich ist die Querschnittskontur der unrunden zylindrischen Außenmantelfläche des Hohlteils 15 des Hauptgehäuses 11. Die mit Schiebesitz ineinandergeführten Flächen 43, 44 bewirken deshalb eine drehfeste Verbindung zwischen dem Hauptgehäuse 11 und dem Teilgehäuse 12.

An der nach außen weisenden Stirnfläche 46 der Gehäusestirnwand 13 ist eine Feststellvorrichtung 47 angeordnet. Zur Festellvorrichtung 47 gehört eine der Gehäusestirnwand 13 angeformte Führungsaufnahme 48, in welcher ein Feststellelement 49 geführt ist. Das Feststellelement 49 weist einen Schaftbereich 50 auf, der nach außen hin durch eine Bedienungshandhabe 51 fortgesetzt ist, welche einen Axialschlitz 52 des Teilgehäuses 12 quer durchsetzt. Auf diese Weise kann das Teilgehäuse 12 völlig unabhängig von der Bedienungshandhabe 51 auf dem Hauptgehäuse 11 in den Axialrichtungen a bzw. b verschoben werden.

An seinem der Bedienungshandhabe 51 abgewandten Ende ist der mittlere Schaftbereich 50 des Feststellelements 49 durch einen hakenförmigen Ansatz 53 fortgesetzt, welcher einen Steckzapfen 54 bildet, der, bezogen auf die vorderseitig der Vorrichtung 10 angeordnete Bedienungshandhabe 51, das Zusatz-Achselement 32 rückseitig hintergreift. In seinem Übergang zum hakenförmigen Ansatz 53 bildet der mittlere Schaftbereich 50 des Feststellelements 49 eine Schulter 55, auf welcher sich das eine Ende einer Schraubendruckfeder 56 abstützt, deren anderes Ende an einem Bereich der Führungsaufnahme 48 anliegt.

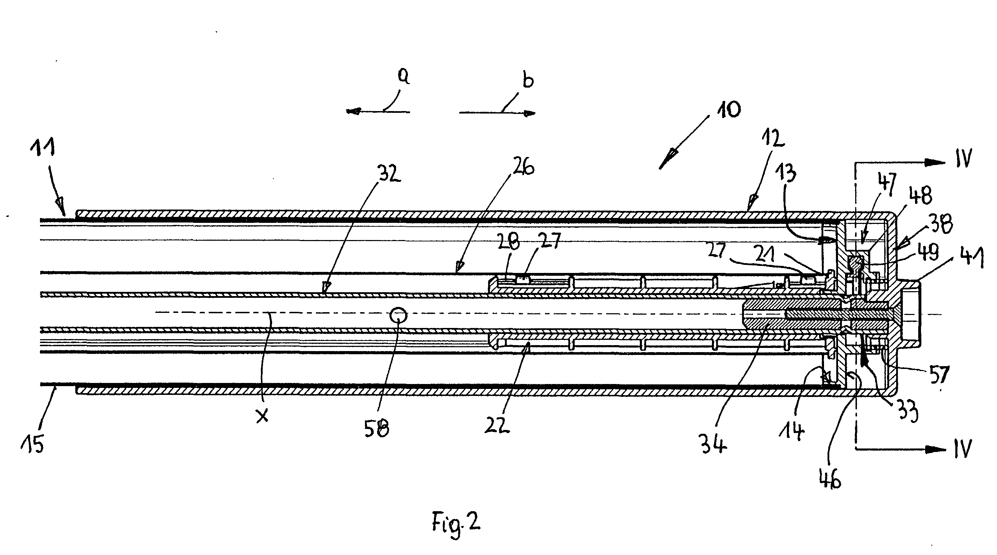

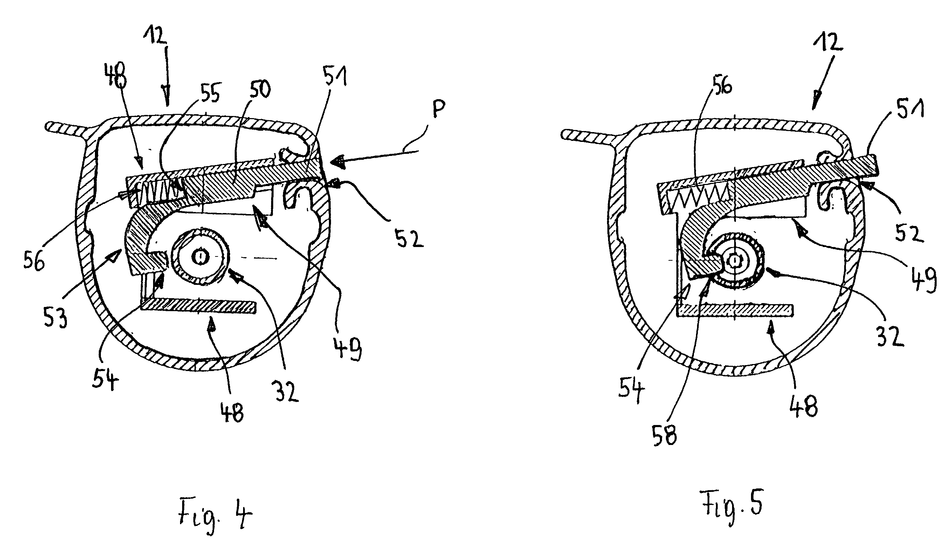

Wenn die Vorrichtung 10 entsprechend den Fig. 2 und 4 ihre geringste Einbaubreite aufweist, dient eine das Zusatz-Achselement 32 umgebende, sich zwischen der Führungsaufnahme 48 und der Innenseite der Gehäusestirnwand 38 des Teilgehäuses 12 abstützende Druckfeder 57 als Ausgleichsfeder, mit welcher gegebenenfalls Einbautoleranzen berücksichtigt werden können.

Wenn die Vorrichtung 10 ihre größte Einbaubreite einnehmen soll, wird das Teilgehäuse 12 so weit vom Hauptgehäuse 11 weggezogen, bis die Position gemäß den Fig. 3, 3A und 5 erreicht ist. Aus Fig. 5 ist zu ersehen, daß der Steckzapfen 54 in ein die Rohrwandung des Zusatz-Achselements 32 durchsetzendes Steckloch 58 eingreift, wodurch das Zusatz-Achselement 32 am Achselement bzw. an der Führungsbuchse 18 festgelegt ist. Der der Rückstellkraft der Schraubendruckfeder 56 entgegenzusetzende, auf die Bedienungshandhabe 51 einwirkende Bedienungsdruck ist mit P bezeichnet.

## Patentansprüche

1. Laderaum-Trennvorrichtung (10) für Fahrzeuge, insbesondere für Kombinations-Personenkraftwagen, mit einer entgegen dem Drehmoment eines Motors von einer Wickelwelle (26) abrollbaren, mit ihrem abgerollten freien Endbereich fahrzeugseitig lösbar festzulegenden Werkstoffbahn (17), wobei die Wickelwelle (26) auf mindestens einem Achselement (18) gelagert ist, mit welchem ein mindestens mittelbar fahrzeugseitig lösbar und drehfest gehaltenes Zusatz-Achselement (32) koaxial und drehfest ist, das zur Veränderung der Einbaulänge der Vorrichtung (10) axial verstellbar und in mindestens einer Verstellposition festzulegen ist, wobei das Achselement (18) das Zusatz-Achselement (32) umgibt, **dadurch gekennzeichnet, dass** ein Gehäuse (11) mit mindestens einer Gehäusestirnwand (13), an welcher eine das Achselement bildende Führungsbuchse (18) gehalten ist, vorgesehen ist, und dass die das Achselement bildende Führungsbuchse (18) mit ihrer Außenmantelfläche eine Drehlagerfläche (19) für eine der rohrförmig ausgebildeten Wickelwelle (26) zugeordnete Gegendrehlagerfläche (20) bildet.

2. Laderaum-Trennvorrichtung nach Anspruch 1, **dadurch gekennzeichnet, daß** die Gegendrehlagerfläche (20) von der kreiszylindrischen Innenmantelfläche einer kreisringförmigen Lagerscheibe (21) gebildet ist, welche an der Wickelwelle (26) festgelegt ist.

3. Laderaum-Trennvorrichtung nach Ansprurch 2, **dadurch gekennzeichnet, daß** die Lagerscheibe (21) und die Lagerhülse (22) ein einstückig, insbesondere stoffschlüssig, zusammenhängendes Bauteil (21, 22), insbesondere ein Kunststoff-Spritzgußteil, bilden.

4. Laderaum-Trennvorrichtung nach Anspruch 1, **dadurch gekennzeichnet, dass** das Zusatz-Achselement (32) und das Achselement (18) mittels einer Feststellvorrichtung (47) lösbar aneinander festzulegen sind.

5. Laderaum-Trennvorrichtung nach Anspruch 4, **dadurch gekennzeichnet, daß** die Feststellvorrichtung (47) an der Gehäusestirnwand (13) befestigt ist.

6. Laderaum-Trennvorrichtung nach Anspruch 5, **dadurch gekennzeichnet, daß** die Feststellvorrichtung (47) an der zum freien Ende (33) des Zusatz-Achselements (32) weisenden Außenfläche (46) der Gehäusestirnwand (13) befestigt ist.

7. Laderaum-Trennvorrichtung nach Anspruch 6, **dadurch gekennzeichnet, daß** an der Gehäusestirnwand (13) eine Führungsaufnahme (48) der Feststellvorrichtung (47) angeformt ist.

## Claims

1. Storage space partition device (10) for vehicles, in particular for estate-type vehicles, having a material web (17) which can be unwound from a winding shaft (26) counter to the torque of a motor and which is to be releasably fixed at the vehicle side with the unwound free end region thereof, the winding shaft (26) being supported on at least one shaft element (18), with which a supplementary shaft element (32) which is at least indirectly retained in a releasable and rotationally secure manner at the vehicle side is coaxial and rotationally secure, which supplementary shaft element (32) can be axially adjusted in order to change the assembly length of the device (10) and is to be fixed in at least one adjusting position, the shaft element (18) surrounding the supplementary shaft element (32), **characterised in that** a housing (11) is provided which has at least one housing end wall (13) on which a guiding sleeve (18) which forms the shaft element is retained, and **in that** the guiding sleeve (18) which forms the shaft element forms, with the outer covering face thereof, a pivot support face (19) for a counter pivot support face (20) which is associated with the tubular winding shaft (26).

2. Storage space partition device according to claim 1, **characterised in that** the counter pivot support face (20) is formed by the circular cylindrical inner covering face of an annular bearing disc (21) which is fixed to the winding shaft (26).

3. Storage space partition device according to claim 2, **characterised in that** the bearing disc (21) and the bearing sleeve (22) form a component (21, 22), in particular an injection-moulded plastics material component, which is assembled integrally, in particular in a materially integral manner.

4. Storage space partition device according to claim 1, **characterised in that** the supplementary shaft element (32) and the shaft element (18) are intended to be releasably fixed to each other by means of a fixing device (47).

5. Storage space partition device according to claim 4, **characterised in that** the fixing device (47) is fixed to the housing end wall (13).

6. Storage space partition device according to claim 5, **characterised in that** the fixing device (47) is fixed to the outer face (46) of the housing end wall (13) that is directed towards the free end (33) of the supplementary shaft element (32).

7. Storage space partition device according to claim 6, **characterised in that** a guiding receiving element (48) of the fixing device (47) is formed on the housing end wall (13).

## Revendications

1. Dispositif séparateur (10) pour le compartiment à bagages de véhicules, notamment de véhicules familiaux, comportant une nappe de matériau (17) pouvant être dévidée d'un arbre enrouleur (26) en s'opposant au couple de rotation d'un moteur, et devant être arrêtée amoviblement, côté véhicule, par sa région extrême libre déroulée, ledit arbre enrouleur (26) étant monté sur au moins un segment d'axe (18) auquel est coaxial, avec verrouillage rotatif, un segment d'axe supplémentaire (32) qui est au moins indirectement dissociable côté véhicule, est retenu avec verrouillage rotatif, est réglable axialement en vue de modifier la longueur d'intégration du dispositif (10), et doit être arrêté dans au moins une position de réglage, le segment d'axe (18) entourant le segment d'axe supplémentaire (32), **caractérisé par le fait qu'**il est prévu un boîtier (11) muni d'au moins une paroi frontale (13) sur laquelle est retenue une douille de guidage (18) matérialisant le segment d'axe; et **par le fait que** ladite douille de guidage (18) matérialisant ledit segment d'axe forme, par la surface de son enveloppe extérieure, une surface (19) de montage rotatif affectée à une surface complémentaire (20) de montage rotatif, assignée à l'arbre enrouleur (26) de réalisation tubulaire.

2. Dispositif séparateur pour compartiment à bagages, selon la revendication 1, **caractérisé par le fait que** la surface complémentaire (20) de montage rotatif est matérialisée par la surface de l'enveloppe intérieure cylindrique droite d'un disque de montage (21) en forme d'anneau circulaire, consigné à demeure sur l'arbre enrouleur (26).

3. Dispositif séparateur pour compartiment à bagages, selon la revendication 2, **caractérisé par le fait que** le disque de montage (21) et la douille de portée (22) forment une pièce structurelle monobloc (21, 22) constituant notamment un ensemble matériellement cohérent, en particulier une pièce venue de moulage par injection en matière plastique.

4. Dispositif séparateur pour compartiment à bagages, selon la revendication 1, **caractérisé par le fait que** le segment d'axe supplémentaire (32) et le segment d'axe (18) doivent être arrêtés amoviblement l'un sur l'autre, au moyen d'un dispositif de blocage (47).

5. Dispositif séparateur pour compartiment à bagages, selon la revendication 4, **caractérisé par le fait que** le dispositif de blocage (47) est fixé à la paroi frontale (13) du boîtier.

6. Dispositif séparateur pour compartiment à bagages, selon la revendication 5, **caractérisé par le fait que** le dispositif de blocage (47) est fixé à la surface extérieure (46) de la paroi frontale (13) du boîtier, pointant vers l'extrémité libre (33) du segment d'axe supplémentaire (32).

7. Dispositif séparateur pour compartiment à bagages, selon la revendication 6, **caractérisé par le fait qu'**un logement de guidage (48) du dispositif de blocage (47) forme un seul tenant avec la paroi frontale (13) du boîtier.
